# FASCICULE DE BREVET EUROPEEN

(11) **EP 1 346 894 B1**
(45) Date de publication et mention de la délivrance du brevet: **13.10.2004**
(21) Numéro de dépôt: 03005808.5
(22) Date de dépôt: 14.03.2003
(51) Int. Cl.: B60T 13/569

(54) **Servomoteur d'assistance pneumatique au freinage comportant des moyens d'étanchéité améliores**
Pneumatischer Bremskraftverstärker mit verbesserter Dichtung
Pneumatic brake servo with improved seals

(30) Priorité: 21.03.2002 FR 0203583
(43) Date de publication de la demande: 24.09.2003
(73) Titulaire: ROBERT BOSCH GmbH, 70442 Stuttgart (DE)
(72) Inventeur: Verbo, Ulysse, 08190 Saint Cugat (ES); Michon, Jean-Pierre, 77178 Saint Pathus (FR)
(74) Mandataire: Hurwic, Aleksander Wiktor

(56) Documents cités:
- FR-A- 2 762 568
- US-A- 5 320 024
- PATENT ABSTRACTS OF JAPAN vol. 007, no. 244 (M-252), 28 octobre 1983 (1983-10-28) & JP 58 128950 A (JIDOSHA KIKI KK), 1 août 1983 (1983-08-01)

## Description

La présente invention se rapporte principalement à un servomoteur d'assistance pneumatique au freinage comportant des moyens d'étanchéité améliorés entre une première chambre pneumatique à pression variable et une seconde chambre pneumatique soumise à une basse pression.

Un servomoteur d'assistance pneumatique au freinage du type connu comporte une enveloppe définissant un volume intérieur divisé par une jupe en une première chambre de travail et une seconde chambre de vide. La chambre de vide est soumise à un fluide à basse pression, et la chambre de travail est une chambre à pression variable susceptible de varier entre une basse pression et une haute pression par exemple de l'air à pression atmosphérique. La jupe de forme sensiblement annulaire reçoit dans sa partie centrale un piston pneumatique, s'étendant vers l'arrière du servomoteur et comportant une valve trois voies. Cette valve trois voies est actionnée par une tige d'actionnement, reliée à une pédale de frein. A l'opposé de l'extrémité de la valve trois voies recevant la tige d'actionnement est disposée une tige de poussée qui actionnera au moins un piston du maître-cylindre. L'étanchéité entre la chambre de travail et la chambre de vide est réalisée entre la jupe et le piston pneumatique et entre la jupe et l'enveloppe par une membrane unique, par exemple fabriquée en caoutchouc de forme sensiblement annulaire et fixée par exemple par pincement sur la périphérie extérieure du piston pneumatique et également par pincement sur la périphérie intérieure de l'enveloppe entre une première et une seconde coquille formant l'enveloppe du servomoteur.

Cependant ce type d'étanchéité réalisé par une membrane de forme sensiblement annulaire pose des problèmes de coût. En effet, il y a un coût matière important puisque la membrane représente une pièce importante à réaliser un caoutchouc, il y a également un coût important de fabrication de cette membrane puisqu'elle est d'une forme relativement complexe, et enfin il y a un coût élevé de montage dans le servomoteur puisque celui-ci nécessite des outils spéciaux et une certaine application afin de ne pas détériorer cette membrane. De plus, les constructeurs automobiles souhaitent de plus en plus des produits d'un poids réduit afin d'alléger le poids du véhicule et cette membrane de par sa taille participe de manière non négligeable au poids du servomoteur dans son ensemble.

C'est par conséquent un but de la présente invention d'offrir un moyen d'étanchéité entre la chambre de travail et la chambre de vide peu coûteux.

C'est également un but de la présente invention d'offrir un moyen d'étanchéité entre la chambre de travail et la chambre de vide de montage simple et économique.

C'est également un but de la présente invention d'offrir un moyen d'étanchéité entre la chambre de travail et la chambre de vide de fabrication simple.

C'est également un but de la présente invention d'offrir un moyen d'étanchéité entre la chambre de travail et la chambre de vide de faible poids .

Ces buts sont atteints par un servomoteur d'assistance pneumatique au freinage comportant une enveloppe divisée en une chambre de travail et une chambre de vide par une jupe munie dans sa partie centrale d'un piston pneumatique, l'étanchéité entre la chambre de travail et la chambre de vide au niveau du contact entre la jupe et le piston pneumatique et la jupe et la périphérie interne de l'enveloppe étant réalisée par deux moyens d'étanchéité distincts.

En d'autres termes l'étanchéité entre le piston et la jupe est réalisée au moyen par exemple d'un joint torique et l'étanchéité entre la jupe et la périphérie interne de l'enveloppe est réalisée par un moyen d'étanchéité glissant de manière étanche sur la surface interne de l'enveloppe, ainsi la jupe réalise par elle même la plus grande partie de l'étanchéité entre la chambre de travail et la chambre de vide. Le document FR 2762568 divulge le préambule de la revendication 1.

L'invention a principalement pour objet un servomoteur d'assistance pneumatique au freinage comportant une enveloppe d'axe longitudinal formée d'un gamelle munie d'un rebord et d'un couvercle, ladite enveloppe définissant un volume intérieur divisé de manière étanche en une chambre de travail à pression variable et une chambre à basse pression par une jupe montée à coulissement étanche selon l'axe longitudinal dans l'enveloppe, ladite jupe étant munie d'un orifice central dans lequel est monté de manière étanche un piston pneumatique, une valve trois voies montée dans le piston pneumatique et actionnée par une tige d'actionnement reliée à une pédale de frein caractérisé en ce que l'étanchéité entre la chambre de travail à pression variable et la chambre à basse pression est réalisée par un premier moyen d'étanchéité disposé entre une première extrémité radialement interne de la jupe et une extrémité radialement externe du piston et par un second moyen d'étanchéité disposé à une seconde extrémité radialement externe de la jupe et la surface interne du rebord, la jupe réalisant l'étanchéité entre la première radialement externe de la jupe et la seconde extrémité radialement interne de la jupe,
ledit second moyen d'étanchéité est une pièce d'étanchéité de forme tubulaire fixée à la jupe et en appui sur la face intérieure du rebord de la gamelle et susceptible de glisser sur ladite face intérieure,
ladite pièce d'étanchéité à une première extrémité longitudinale est fixée par pincement dans un repli pratiqué sur une extrémité radiale externe de la jupe,
caractérisé en ce qu'une cavité à basse pression est réalisée dans le repli, entre le fond intérieur du repli et la première extrémité de la pièce d'étanchéité.

L'invention a également pour objet un servomoteur d'assistance pneumatique au freinage caractérisé en ce que le premier moyen d'étanchéité est un joint torique monté dans une gorge pratiquée sur la périphérie extérieure du piston pneumatique.

L'invention a également pour objet un servomoteur d'assistance pneumatique au freinage caractérisé en ce que la première extrémité la pièce d'étanchéité comporte des languettes orientées vers la tige d'actionnement en appui lors du freinage sur la jupe.

L'invention a également pour objet un servomoteur d'assistance pneumatique au freinage caractérisé en ce que une seconde extrémité longitudinale de la pièce d'étanchéité formant une lèvre orientée vers l'arrière est susceptible de glisser sur la face interne du rebord de la gamelle.

L'invention a également pour objet un servomoteur d'assistance pneumatique au freinage caractérisé en ce que la pièce d'étanchéité est réalisée en caoutchouc.

L'invention a également pour objet un servomoteur d'assistance pneumatique au freinage caractérisé en ce que la pièce d'étanchéité est réalisée en EPDM glissant.

L'invention a également pour objet un servomoteur d'assistance pneumatique au freinage caractérisé en ce que le couvercle est emboîté de manière étanche dans la gamelle.

L'invention a également pour objet un servomoteur d'assistance pneumatique au freinage caractérisé en ce que l'élément d'étanchéité est un joint torique monté dans une gorge formée dans l'extrémité radiale externe du couvercle et en appui contre la face interne du rebord de la gamelle.

L'invention a également pour objet un servomoteur d'assistance pneumatique au freinage caractérisé en ce que la gorge est réalisée par pliage.

La présente invention a pour avantage de permettre une adaptation simple aux différents types de servomoteur ayant des diamètres d'enveloppe différents uniquement en changeant la taille du moyen d'étanchéité entre la jupe et la surface interne de l'enveloppe sans avoir à modifier la forme de ce moyen d'étanchéité.

La présente invention sera mieux comprise à l'aide de la description qui suit et des dessins annexés pour lequel l'avant et l'arrière sont respectivement la partie gauche et la partie droite des dessins et sur lesquels
la figure 1 est une vue en coupe longitudinale d'un servomoteur de type connu ;
la figure 2 est une vue en coupe d'un servomoteur d'assistance pneumatique au freinage selon la présente invention ;
la figure 3 est une vue de détail de la figure 2.

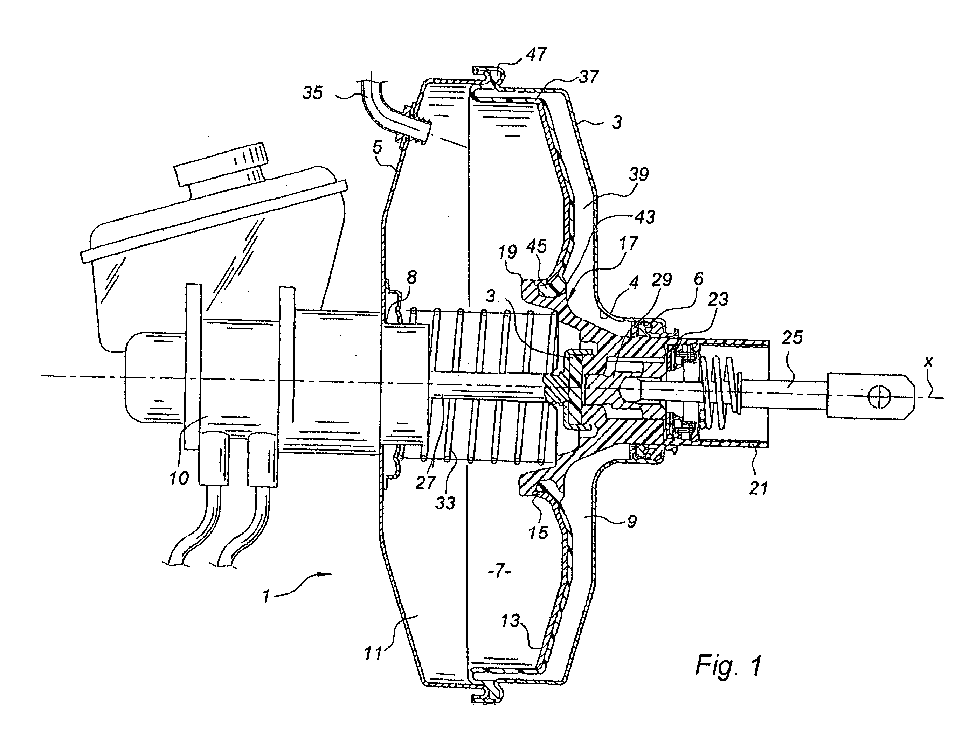

Pour la figure 1, les éléments décrits ci-dessous sont sensiblement de forme de révolution autour de l'axe X, axe longitudinal du servomoteur- d'assistance au freinage décrits.

Sur la figure 1 on peut voir un servomoteur pneumatique de freinage de type connu d'axe longitudinal X comportant une enveloppe 1 formée par une première et une seconde coquille 3 et 5, les coquilles 3 et 5 étant serties par leur périphérie extérieure. La coquille 3 comporte un orifice centrale 4 s'étendant vers l'arrière par une cheminée 6 dans laquelle est monté à coulissement étanche un piston pneumatique 17, la coquille 5 comporte un orifice 8 centrale recevant un maître-cylindre 10. L'enveloppe 1 définit un volume intérieur 7 divisé de manière étanche en une chambre de travail 9 et une chambre de vide 11 au moyen d'une jupe de forme sensiblement annulaire 13 susceptible de se déplacer selon l'axe X sous une différence de pressions. La jupe 13 comporte dans sa partie centrale un orifice 15 dans lequel est monté de manière étanche le piston pneumatique 17 comportant à une première extrémité orientée vers l'avant une partie de forme sensiblement conique 19 de conicité orientée vers l'arrière et à une seconde extrémité orientée vers l'arrière un manchon 21. Une valve trois voies de type connu 23 disposée à l'intérieur du piston pneumatique est commandée par une tige d'actionnement 25 reliée à une pédale de frein (non représentée). Au repos, la valve trois voies 23 met en communication la chambre de vide 11 et la chambre de travail 9, et lors d'une phase de freinage elle met en communication la chambre de travail 9 et l'environnement extérieur à haute pression.

L'action de freinage fournie par le conducteur et l'assistance fournie par le servomoteur est transmise à au moins un piston du maître-cylindre par l'intermédiaire d'une tige de poussée 27. Un disque de réaction 31 est disposé entre un distributeur plongeur 29 formant une partie de la valve trois voies 23 et recevant une extrémité longitudinale avant de la tige de commande 25 et une extrémité longitudinale arrière de la tige de poussée 27 et transmettant la réaction du circuit de freinage à la pédale de frein. Un ressort de rappel 33 est monté en compression dans la chambre de vide entre le piston pneumatique et l'enveloppe permettant le retour en position repos du piston pneumatique et de la jupe.

La chambre de vide 11 est alimentée en fluide pneumatique à basse pression par l'intermédiaire d'un connecteur étanche 35, le fluide pneumatique à basse pression provenant, par exemple de la dépression moteur ou d'une pompe pneumatique (non représentée).

L'étanchéité entre la chambre avant de vide 11 et la chambre arrière de travail 9 est réalisée au moyen d'une membrane 39 en forme de tube 37 de faible longueur relativement à son diamètre intérieur et obturé à une extrémité par un fond 41, la membrane 39 réalisant l'étanchéité entre la jupe 13 et l'enveloppe 1 et entre la jupe 13 et le piston pneumatique 17.

Le fond 41 de la membrane 39 orienté vers l'arrière comporte un orifice centrale 43 recevant la partie avant 19 du piston 17 sur laquelle le fond 41 est fixé de manière étanche par pincement d'un bourrelet 45 bordant la périphérie de l'orifice centrale 43 entre la jupe 13 et la périphérie du piston 17. La membrane 13 est également fixée de manière étanche à l'intérieur de l'enveloppe 13 par pincement d'un bourrelet annulaire 47 bordant l'extrémité longitudinale avant du tube entre les coquilles 3,5.

La chambre de travail 9 est une chambre à pression variable; au repos elle est en communication avec la chambre de vide 11 et est donc soumise à la basse pression, lors d'une action de freinage la communication entre la chambre de vide 11 et la chambre de travail 9 est interrompue et la communication entre la chambre de travail 9 et l'environnement extérieur s'ouvre afin de permettre l'entrée à un fluide pneumatique à haute pression d'entrer dans la chambre de travail 9, ce fluide pneumatique à haute pression peut par exemple être l'air à la pression atmosphérique. La différence de pression entre la chambre de vide 11 et la chambre de travail 9 provoque le déplacement de la jupe 13 et du piston 17 en direction de la tige de poussée et assiste alors l'action de freinage du conducteur sur la pédale de frein.

Lors du freinage et du déplacement de la jupe selon l'axe X et du piston sous la différence de pression entre la chambre de travail et la chambre de vide, la membrane, appelée communément membrane déroulante, se déroule le long de la paroi radialement interne de l'enveloppe 1.

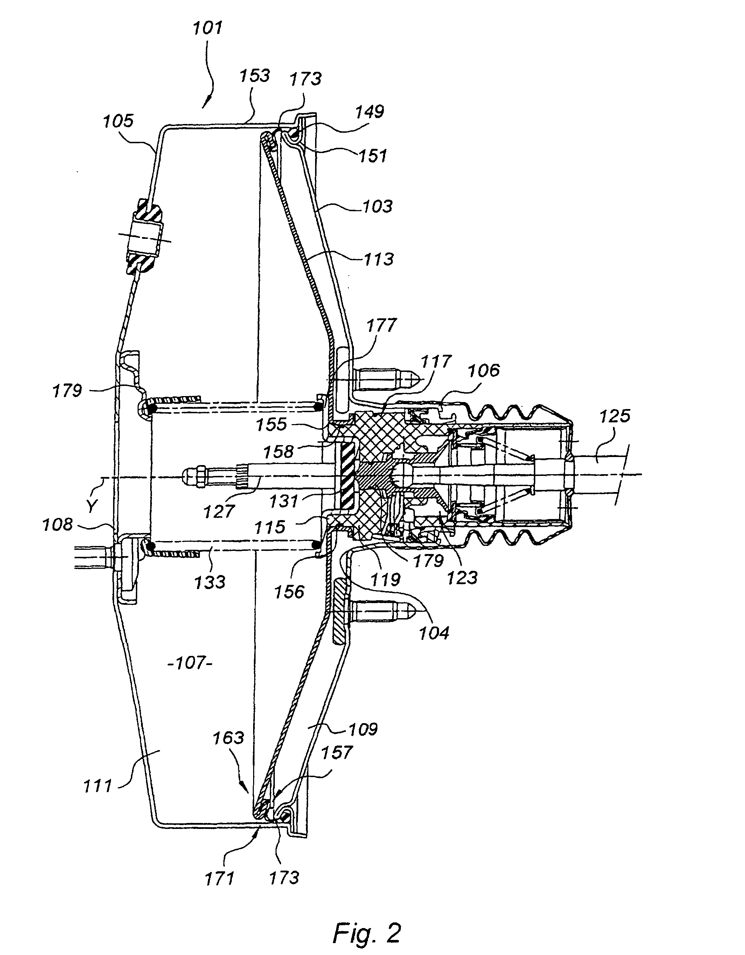

Sur la figure 2 on peut voir un servomoteur d'assistance pneumatique au freinage selon la présente invention.

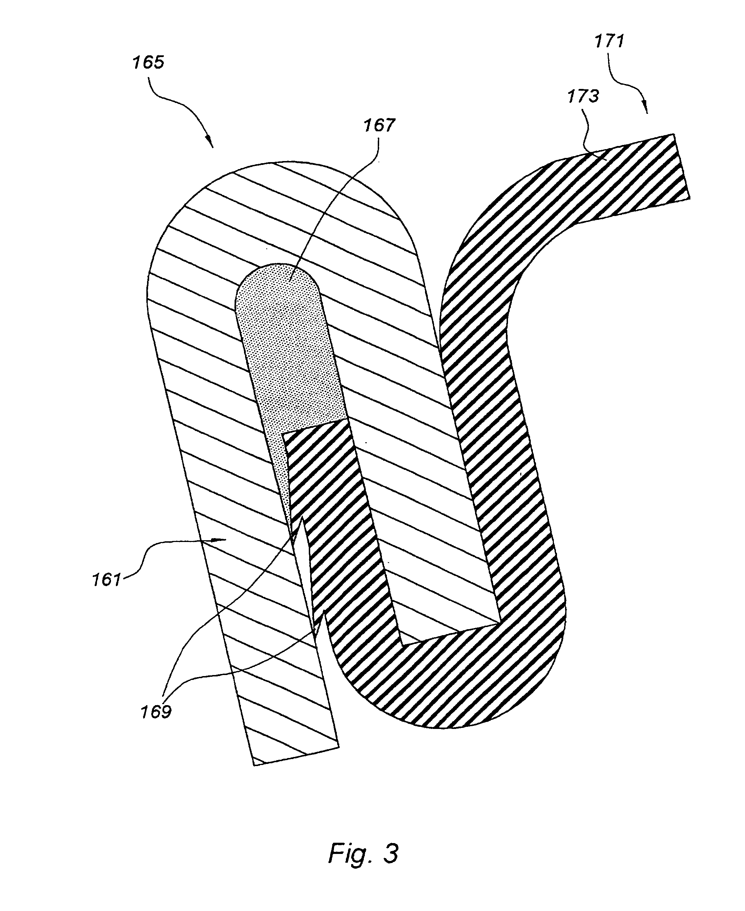

Pour les figures 2 et 3, les éléments décrits ci-dessous sont sensiblement de forme de révolution autour de l'axe Y, axe longitudinal des servomoteurs d'assistance au freinage décrits.

Le servomoteur pneumatique d'assistance au freinage selon la présente invention d'axe Y comporte une enveloppe 101, une jupe 113 montée à coulissement étanche dans l'enveloppe 101, un piston pneumatique 117 monté fixe dans une partie centrale de la jupe 113, ledit piston 117 étant muni d'une valve trois voies susceptible de mettre en communication une chambre à basse pression 111 disposée à l'avant de la jupe 113 et une chambre à pression variable 109 à l'arrière de la jupe 113. L'étanchéité entre les chambres 111 et 109 est réalisée par un premier et un second moyens d'étanchéité 157,156 disposés respectivement entre la jupe l'enveloppe et entre le jupe et le piston.

Le couvercle est formée d'un couvercle 103 et d'une gamelle 105 munie d'un rebord 153 par exemple en tôle d'acier embouti de faible épaisseur, le couvercle 103 s'emboîtant dans la gamelle 105 et comportant un moyen d'étanchéité 149, par exemple un joint monté fixe dans une gorge annulaire 151 formée sur la périphérie radialement externe du couvercle formée par pliage de la tôle, le joint 149 venant en application étanche contre la surface interne du rebord 153 de la gamelle 105. Le couvercle 103 comporte un orifice centrale 104 s'étendant vers l'arrière par une cheminée 106 dans laquelle est monté à coulissement étanche une partie arrière du piston pneumatique 117, et la gamelle 105 comporte un orifice centrale 108 recevant un maître-cylindre (non représenté). L'enveloppe 101 définit un volume intérieur 107 dans lequel est monté à coulissement étanche selon l'axe Y, une jupe 113 de forme sensiblement annulaire comportant dans sa partie centrale un orifice 115 dans lequel est monté de manière fixe et étanche une première extrémité 119 orientée vers l'avant du piston pneumatique 117 formée d'un premier manchon monté à force dans la jupe 13. L'orifice 115 est bordé d'une gouttière 155 dont la surface extérieure entoure le manchon 119 du piston 117. Le second premier moyen d'étanchéité 156 par exemple un joint torique est disposé en contact étanche contre la surface extérieure de la gouttière 155 dans une gorge 158 pratiquée sur la périphérie extérieur du manchon 119 du piston 117.

La chambre de vide 111 étant en communication avec une source de vide par exemple une pompe à vide ou la dépression moteur.

L'étanchéité entre la jupe 113 et l'enveloppe 101 est réalisée par le premier moyen d'étanchéité 157 fixe par rapport à la jupe 113 et monté mobile et susceptible de glisser sur la surface intérieure du rebord 153 de l'enveloppe 101.

Le premier moyen d'étanchéité 157 est formé d'une portion de tube de faible longueur relativement à son diamètre, le diamètre du tube 157 étant sensiblement égal au diamètre extérieur de la jupe 113. Un première extrémité longitudinale 161 du tube 157 orientée vers l'avant est montée de manière fixe à une extrémité radialement externe 163 de la jupe 113 par pincement de cette première extrémité 161 du tube 157 au moyen d'un repli 165 annulaire orienté vers la tige d'actionnnement 125 et formé sur l'extrémité radialement externe de la jupe 113. Avantageusement, une cavité à basse pression 167 est prévue entre le repli 165 et la première extrémité longitudinale 161 de la partie du tube 157, ainsi que des languettes d'étanchéité 169 sur la surface extérieure du tube 157 pincée dans le repli 165, lesdites languettes 169 étant orientées dans la direction opposée à celle de la cavité à basse pression 167.

En phase de freinage, les languettes 169 sont collées contre la jupe 113 du fait de la différence de pression entre la chambre de travail 109 et la chambre à basse pression 111 augmentant l'étanchéité entre la jupe 113 et le tube 157.

Au repos, les languettes 169 se décollent de la jupe 113 du fait de l'équilibre de pressions entre la chambre de vide 111 et la chambre de travail 109 permettant une réalimentation en fluide pneumatique à basse pression de la cavité 167, et permettant ainsi d'augmenter l'étanchéité ente la chambre de vide 111 et la chambre de travail 109 en phase de freinage.

On peut envisager que la première extrémité 161 du tube 157 soit fixée de manière étanche à la jupe 113 d'une autre manière que par pincement, par exemple par accrochage sur la jupe, il faudra alors prévoir des moyens d'accrochage sur la jupe et sur le tube 157 susceptible de coopérer entre eux, ou par collage, il n'est plus alors utile de prévoir la chambre à pression atmosphérique 172.

A une seconde extrémité longitudinale 171 du tube 157 orientée vers l'arrière, la surface externe du tube forme une lèvre annulaire 173 en contact sensiblement de manière tangentielle contre la surface interne du rebord 153 de la gamelle 105. L'application de la lèvre 173 sur la surface interne du rebord 153 de la gamelle 105 est augmentée lors d'une phase de freinage par la différence de pressions régnant entre la chambre de vide 111 et la chambre de travail 109, en effet la lèvre 173 est « aspirée » vers la chambre de vide 111 et « se colle » à la surface interne 153 de la gamelle 105. La lèvre 173 est de longueur suffisante pour réaliser l'étanchéité des deux chambres 109,111 sans risque de se placer entre l'extrémité radialement externe de la jupe 113 et le rebord 153.

L'étanchéité dépend de la force d'application du joint annulaire 156 sur la surface intérieure du rebord 153, qui est par exemple une force de compression du joint annulaire entre la jupe et le rebord 153.

Le moyen d'étanchéité 157 est réalisé en matière élastique, souple et étanche à l'air, par exemple en caoutchouc ou en EPDM glissant.

Le piston pneumatique 117 est formé d'une pièce sensiblement de révolution percé d'un passage longitudinal 179 traversant, recevant une valve trois voies 123 de type connu actionnée par une tige d'actionnement 123 reliée à une pédale de frein (non représentée), la valve 123 mettant au repos en communication la chambre de vide 111 et la chambre de travail 109, et lors d'une phase de freinage la chambre de travail 109 et l'environnement extérieur à haute pression.

Nous ne décrirons pas la structure et le fonctionnement connus de la valve trois voies

L'action de freinage fournie par le conducteur et l'assistance fournie par le servomoteur est transmise à au moins un piston d'un maître-cylindre par l'intermédiaire d'une tige de poussée 127. Un disque de réaction 131 est disposé entre un distributeur plongeur 133 formant une partie de la valve trois voies 123 et recevant une extrémité longitudinale avant de la tige de commande 125 et une extrémité longitudinale arrière de la tige de poussée 127 et transmettant la réaction du circuit de freinage à la pédale de frein.

Un ressort de rappel 133 est monté en compression dans la chambre de vide, dans l'exemple représenté, il est en appui entre une pièce de renfort 179 appliquée contre la surface interne de la gamelle 105 et les rebords d'une pièce 177 en forme sensiblement de chapeau dont le fond coopère avec la face avant du piston pneumatique 117 et les rebords sont en partie appliqués contre la face avant de la jupe 113.

Lors du fonctionnement, le conducteur appuie sur la pédale de frein qui déplace la tige d'actionnement 125. Il y a alors fermeture de la communication entre la chambre de vide 105 et la chambre de travail 103 et ouverture de la communication entre la chambre de travail 103 et l'environnement extérieur à pression atmosphérique. Du fait de la différence de pression qui apparaît entre la chambre de travail 103 et la chambre de vide 105, la jupe 113 et le piston pneumatique 117 se déplacent en direction de la tige de poussée 127 selon l'axe Y. L'extrémité extérieure du moyen d'étanchéité 157 susceptible de glisser de manière étanche sur la surface intérieure du rebord 153 de l'enveloppe 101 réalise l'étanchéité entre la chambre de travail 109 et la chambre avant 111 sans gêner le déplacement longitudinal de la jupe dans l'enveloppe 101.

On a bien réalisé un servomoteur comportant des moyens d'étanchéité entre la chambre de vide et la chambre de travail simple et peu coûteux, puisque la pièce d'étanchéité réalisant l'étanchéité entre la surface interne de l'enveloppe et la jupe est fabriquée à partir d'un tube en matière élastique et étanche à l'air, par exemple du caoutchouc ou en EPDM glissant, découpé longitudinalement à la longueur souhaitée, et l'étanchéité entre la jupe 113 et le piston pneumatique 117 est effectuée au moyen d'un joint torique standard de prix de revient faible. Il n'est alors plus nécessaire de réaliser une membrane moulée en forme de pot munie de bourrelets bordant ses extrémités.

De plus le montage est simplifié puisque le moyen d'étanchéité n'est fixé que sur la jupe et simplement en appui contre la surface interne de l'enveloppe.

Il est bien entendu qu'un servomoteur d'assistance pneumatique au freinage comportant une chambre de travail disposée à l'avant du servomoteur et une chambre de vide disposée à l'arrière du servomoteur ne sort pas du cadre de la présente invention.

La présente invention s'applique notamment à l'industrie automobile.

La présente invention s'applique principalement à l'industrie des systèmes de freinage pour véhicules automobiles et notamment pour voitures particuliers.

## Revendications

1. Servomoteur d'assistance pneumatique au freinage comportant une enveloppe (101) d'axe longitudinal (Y) formée d'un gamelle (105) munie d'un rebord (153) et d'un couvercle (103), ladite enveloppe (101) définissant un volume intérieur (107) divisé de manière étanche en une chambre de travail (109) à pression variable et une chambre à basse pression (111) par une jupe (113) montée à coulissement étanche selon l'axe longitudinal (Y) dans l'enveloppe (107), ladite jupe (113) étant munie d'un orifice central (115) dans lequel est monté de manière étanche un piston pneumatique (117), une valve trois voies (123) montée dans le piston pneumatique (117) et actionnée par une tige d'actionnement (125) reliée à une pédale de frein, l'étanchéité entre la chambre de travail (109) à pression variable et la chambre à basse pression (111) étant réalisée par un premier moyen d'étanchéité (156) disposé entre une première extrémité radialement interne de la jupe (113) et une extrémité radialement externe du piston (117) et par un second moyen d'étanchéité (157) disposé à une seconde extrémité radialement externe de la jupe et la surface interne du rebord (153), la jupe réalisant l'étanchéité entre la première extrémité radialement externe de la jupe et la seconde extrémité radialement interne de la jupe, ledit second moyen d'étanchéité étant une pièce d'étanchéité (157) de forme tubulaire fixée à la jupe (113) et en appui sur la face intérieure du rebord (153) de la gamelle (105) et susceptible de glisser sur ladite face intérieure, ladite pièce d'étanchéité (157) est fixée à une première extrémité longitudinale (161) par pincement dans un repli (165) pratiqué sur une extrémité radiale externe (163) de la jupe (113) **caractérisé en ce qu'**une cavité à basse pression (167) est réalisée dans le repli (165), entre le fond intérieur du repli (165) et la première extrémité de la pièce d'étanchéité (157).

2. Servomoteur d'assistance pneumatique au freinage selon la revendication 1 **caractérisé en ce que** la première extrémité (161) la pièce d'étanchéité (157) comporte des languettes (169) orientées vers la tige d'actionnement (125) en appui lors du freinage sur la jupe (113).

3. Servomoteur d'assistance pneumatique au freinage selon la revendication 1 ou 2 **caractérisé en ce que** le premier moyen d'étanchéité est un joint torique (156) monté dans une gorge (158) pratiquée sur la périphérie extérieure du piston pneumatique (117).

4. Servomoteur d'assistance pneumatique au freinage selon l'une des revendications 1, 2 ou 3 **caractérisé en ce qu'**une seconde extrémité longitudinale (171) de la pièce d'étanchéité (157) formant une lèvre (173) orientée vers l'arrière est susceptible de glisser sur la face interne du rebord (153) de la gamelle (105).

5. Servomoteur d'assistance pneumatique au freinage selon l'une quelconque des revendications de 1 à 4 **caractérisé en ce que** la pièce d'étanchéité (157) est réalisée en caoutchouc.

6. Servomoteur d'assistance pneumatique au freinage selon l'une quelconque des revendications de 1 à 5 **caractérisé en ce que** la pièce d'étanchéité (157) est réalisée en EPDM glissant.

7. Servomoteur d'assistance pneumatique au freinage selon l'une quelconque des revendications précédentes **caractérisé en ce que** le couvercle (103) est emboîté de manière étanche dans la gamelle (105).

8. Servomoteur d'assistance pneumatique au freinage selon la revendication 7 **caractérisé en ce que** l'étanchéité entre le couvercle et la gamelle est réalisé par un joint torique (149) monté dans une gorge (151) formée dans l'extrémité radiale externe du couvercle (103) et en appui contre la face interne du rebord (153) de la gamelle (105).

9. Servomoteur d'assistance pneumatique au freinage selon la revendication 8 **caractérisé en ce que** la gorge (151) est réalisée par pliage.

## Patentansprüche

1. Pneumatischer Servomotor zur Bremsunterstützung, enthaltend ein Gehäuse (101) mit Längsachse (Y), das aus einer mit einem Rand (153) und einem Deckel (103) versehenen Schale (105) gebildet ist, wobei das Gehäuse (101) ein inneres Volumen (107) definiert, das durch eine Schürze (113), die in dem Gehäuse (107) entlang einer Längsachse (Y) in dichter Weise verschiebbar angebracht ist, in dichter Weise in eine Arbeitskammer (109) mit variablem Druck und eine Niederdruckkammer (111) geteilt ist, wobei die Schürze (113) mit einer mittleren Öffnung (115) versehen ist, in der in dichter Weise ein pneumatischer Kolben (117) angebracht ist und ein Dreiwegeventil (123), das in dem pneumatischen Kolben (117) angebracht ist und durch eine mit einem Bremspedal verbundene Betätigungsstange (125) betätigt wird, wobei die Dichtigkeit zwischen der Arbeitskammer (109) mit variablem Druck und der Niederdruckkammer (111) durch ein erstes Dichtmittel (156), das zwischen einem ersten, radial inneren Ende der Schürze (113) und einem radial äußeren Ende des Kolbens (117) liegt, und durch ein zweites Dichtmittel (157) ausgeführt ist, das zwischen einem zweiten, radial äußeren Ende der Schürze und der inneren Oberfläche des Randes (153) angeordnet ist, wobei die Schürze die Dichtigkeit zwischen dem ersten, radial äußeren Ende der Schürze und dem zweiten, radial inneren Ende der Schürze realisiert, wobei das zweite Dichtmittel ein röhrenförmiges Dichtteil (157) ist, das an der Schürze (113) befestigt ist, sich auf der Innenseite des Randes (153) der Schale (105) abstützt und auf der Innenseite gleiten kann, wobei der Dichtteil (157) an einem ersten Längsende (161) durch Klemmen in einer Falte (165) befestigt ist, die an einem radial äußeren Ende (163) der Schürze (113) vorgesehen ist, **dadurch gekennzeichnet, dass** ein Hohlraum (167) mit niedrigem Druck in der Falte (165), zwischen dem inneren Boden der Falte (165) und dem ersten Ende des Dichtteils (157), gebildet ist.

2. Pneumatischer Servomotor zur Bremsunterstützung nach Anspruch 1, **dadurch gekennzeichnet, dass** das erste Ende (161) des Dichtteils (157) Laschen (169) aufweist, die zur Betätigungsstange (125) hin gerichtet sind und sich beim Bremsen an der Schürze (113) abstützen.

3. Pneumatischer Servomotor zur Bremsunterstützung nach Anspruch 1 oder 2, **dadurch gekennzeichnet, dass** das erste Dichtmittel eine torische Dichtung (156) ist, die in einer Nut (158) angebracht ist, welche auf dem Außenumfang des pneumatischen Kolbens (117) vorgesehen ist.

4. Pneumatischer Servomotor zur Bremsunterstützung nach einem der Ansprüche 1, 2 oder 3, **dadurch gekennzeichnet, dass** ein zweites Längsende (171) des Dichtteils (157), das eine nach hinten gerichtete Lippe (173) bildet, auf der Innenseite des Randes (153) der Schale (105) gleiten kann.

5. Pneumatischer Servomotor zur Bremsunterstützung nach einem der Ansprüche 1 bis 4, **dadurch gekennzeichnet, dass** der Dichtteil (157) aus Gummi hergestellt ist.

6. Pneumatischer Servomotor zur Bremsunterstützung nach einem der Ansprüche 1 bis 5, **dadurch gekennzeichnet, dass** der Dichtteil (157) aus gleitendem EPDM hergestellt ist.

7. Pneumatischer Servomotor zur Bremsunterstützung nach einem der vorhergehenden Ansprüche, **dadurch gekennzeichnet, dass** der Deckel (103) in dichter Weise in der Schale (105) eingefügt ist.

8. Pneumatischer Servomotor zur Bremsunterstützung nach Anspruch 7, **dadurch gekennzeichnet, dass** die Dichtigkeit zwischen dem Deckel und der Schale durch eine torische Dichtung (149) ausgeführt ist, die in einer Nut (151) angebracht ist, welche in dem radial aüßeren Ende des Deckels (103) gebildet ist, und die sich gegen den inneren Rand (153) der Schale (105) stützt.

9. Pneumatischer Servomotor zur Bremsunterstützung nach Anspruch 8, **dadurch gekennzeichnet, dass** die Nut (151) durch Faltung gebildet ist.

## Claims

1. Pneumatic brake booster comprising an envelope (101) of longitudinal axis (Y) formed of a dish (105) equipped with a rim (153) and a lid (103), said envelope (101) defining an interior volume (107) divided sealingly into a variable-pressure work chamber (109) and a low-pressure chamber (111) by a skirt (113) mounted to slide with sealing along the longitudinal axis (Y) in the envelope (107), said skirt (113) being equipped with a central orifice (115) in which a pneumatic piston (117) is sealingly mounted, a three-way valve (123) mounted in the pneumatic piston (117) and actuated by an actuating rod (125) connected to a brake pedal, the said sealing between the variable-pressure work chamber (109) and the low-pressure chamber (111) is achieved by a first sealing means (156) arranged between a radially internal first end of the skirt (113) and a radially external end of the piston (117) and by a second sealing means (157) arranged at a radially external second end of the skirt and the internal surface of the rim (153), the skirt providing sealing between the radially external first end of the skirt and the radially internal second end of the skirt, the second sealing means being a sealing piece (157) of tubular shape fixed to the skirt (113) and bearing against the interior face of the rim (153) of the dish (105) and able to slide over said interior face, the said sealing piece (157) at a first longitudinal end (161) is fixed by trapping in a fold (165) made on an external radial end (163) of the skirt (113), **characterized in that** a low-pressure cavity (167) is produced in the fold (165), between the interior end of the fold (165) and the first end of the sealing piece (157).

2. Pneumatic brake booster according to Claim 1, **characterized in that** the first end (161) of the sealing piece (157) has tabs (169) oriented toward the actuating rod (125) bearing, during braking, upon the skirt (113).

3. Pneumatic brake booster according to Claim 1 or 2, **characterized in that** the first sealing means is an O-ring seal (156) mounted in a groove (158) made on the external periphery of the pneumatic piston (117).

4. Pneumatic brake booster according to Claim 1,2 or 3 **characterized in that** a second longitudinal end (171) of the sealing piece (157), forming a rearwardly-directed lip (173), is able to slide over the internal face of the rim (153) of the dish (105).

5. Pneumatic brake booster according to any one of Claims 1 to 4, **characterized in that** the sealing piece (157) is made of rubber.

6. Pneumatic brake booster according to any one of Claims 3 to 5, **characterized in that** the sealing piece (157) is made of slippery EPDM.

7. Pneumatic brake booster according to any one of proceeding Claims , **characterized in that** the lid (103) is fitted sealingly into the dish (105).

8. Pneumatic brake booster according to Claim 7, **characterized in that** the sealing element (149) is an O-ring seal mounted in a groove (151) formed in the external radial end of the lid (103) and bearing against the internal face of the rim (153) of the dish (105).

9. Pneumatic brake booster according to Claim 8, **characterized in that** the groove (151) is produced by folding.
